# EUROPÄISCHE PATENTSCHRIFT

(11) **EP 2 020 764 B1**
(45) Veröffentlichungstag und Bekanntmachung des Hinweises auf die Patenterteilung: **30.04.2014**
(21) Anmeldenummer: 08013684.9
(22) Anmeldetag: 30.07.2008
(51) Int. Cl.: H04B 7/185

(54) **Kommunikationssystem, Flugzeug mit einem solchen Kommunikationssystem und Kommunikation eines Flugzeugsytems mit einem externen Kommunikationspartner**
Communication system, aircraft with such a communication system and communication of one airplane with an external communication partner
Système de communication, avion doté d'un tel système de communication et communication d'un système d'avion avec un partenaire de communication externe

(30) Priorität: 30.07.2007 DE 102007035678
(43) Veröffentlichungstag der Anmeldung: 04.02.2009
(73) Patentinhaber: MBDA Deutschland GmbH, 86529 Schrobenhausen (DE)
(72) Erfinder: Brand, Matthias, 85276 Pfaffenhofen a.d. Ilm (DE)
(74) Vertreter: Avenhaus, Beate

(56) Entgegenhaltungen:
- EP-A- 1 798 872
- WO-A-02/086658
- US-A- 6 147 980

## Beschreibung

Die Erfindung betrifft ein Kommunikationssystem, ein Flugzeug mit einem solchen Kommunikationssystem und ein Verfahren zur Kommunikation eines Flugzeugssystems mit einem externen Kommunikationspartner. Das Flugzeug kann ein Fluggerät, ein Flugkörper und dabei insbesondere ein Lenkflugkörper oder eine Drohne sein. Das Flugzeug kann also ein unbemanntes Flugzeug und insbesondere ein Lenkflugkörper sein.

Die EP 1 798 872 A und die US 6 147 980AS offenbaren ein Kommunikationsmodul zum Einbau in ein Flugzeug oder in einer Bodenstation für den Datentransfer zwischen zumindest dem Flugzeug und einem Kommunikationspartner und insbesondere einem weiteren Flugzeug oder einer Bodenstation über eine Satellitenverbindung. Das Kommunikationsmodul weist ein Empfangsmodul zum Empfang von Zeichenketten mit Kommandos und/oder Daten über eine Antenne von der Satellitenverbindung und ein Sendermodul zum Versenden der Zeichenketten über die Satellitenverbindung auf.

Die WO 02/086656 A beschreibt ein Verfahren zur telemetrischen Lokalisierung von Luftfahrzeugen unter Verwendung eines Internetprotokolls.

Aus der US 2003/0008611 A1 ist ein Kommunikationssystem zur Datenübertragung über ein Satellitenverbindung zwischen einem Flugkörper und einer Bodenstation bekannt. Dabei handelt es sich um eine bidirektionale Funkverbindung, mit der erst dann Daten übertragen können, wenn die Verbindung vom Sender zum Empfänger über die Satellitenverbindung aufgebaut ist. Wird diese Verbindung unterbrochen, z.B. weil die Antenne des Flugkörpers abgeschattet ist, so muss dies vom Sender zunächst erkannt werden und dann die Verbindung neu aufgebaut werden, was aufwändig und zeitintensiv ist. Weiterhin ist es situationsbedingt notwendig, die Antenne aktiv in Richtung Relaisstation auszurichten.

Aufgabe der Erfindung ist, ein Kommunikationssystem, ein Flugzeug mit einem solchen Kommunikationssystem und ein Verfahren zur Kommunikation eines Flugzeugssystems mit einem externen Kommunikationspartner zu schaffen, mit denen auf möglichst einfache Weise eine robuste Steuerung und/oder die Nutzung eines Flugzeugs und dessen Systems von einem Kommunikationspartner aus möglich ist.

Diese Aufgabe wird mit den Merkmalen der unabhängigen Ansprüche gelöst. Weitere Ausführungsformen sind in den auf diese rückbezogenen Unteransprüchen angegeben.

Die erfindungsgemäße Lösung kann zur Datenübertragung insbesondere den aus dem GSM Mobilfunk bekannten und standardisierten Short Message Service (SMS) bzw. Derivate hieraus nutzen, um Kommandosequenzen und/oder Flugdaten und/oder Sensor- und Auswertungsdaten zu übertragen. Aufgrund des SMS Übertragungsprotokolls ist eine permanente Verbindung zwischen Sender und Empfänger nicht notwendig, da das Übertragungssystem, z.B. Iridium, selber die Weiterleitung der SMS Nachrichten von Station zu Station handhabt und eine Empfangsunterbrechung selber erkennt und die SMS Nachricht solange sendet, bis sie letztendlich beim Empfänger angekommen ist.

Im Flugzeugseitig ist ein Kommunikationssystem oder ein Data Link Gerät (DLG) integriert, das aus einem Sende-/Empfangs-Modem und einer Rechnervorrichtung gebildet ist. Die Rechnervorrichtung kann zum Einen empfangene Nachrichten auswerten und Kommandos ausführen oder via Flugkörperdatenbus weiterleiten. Zum anderen kann die Rechnervorrichtung die zu sendenden Daten vom Flugkörperdatenbus ausfiltern und aufbereiten sowie die insbesondere SMS-konforme Aufbereitung der Nachricht zum Senden via Modem durchführen.

Als Bodenstation genügt als Minimalkonfiguration ein Mobiltelefon, welches jedoch mit einem Rechner verbunden sein kann, auf welchem eine Flugkörpersteuerungs- und Kontrollsoftware läuft. Das Mobiltelefon als Minimalkonfiguration erlaubt z.B., dass verdeckt agierende Personen in militärischen Einsatzgebieten die Flugbahn oder Missionsplanung des Flugkörpers beeinflussen. Das erfindungsgemäße Kommunikationssystem dient zum Datentransfer zwischen zumindest einem Flugkörper und mindestens einer Bodenstation oder zwischen zumindest zwei Flugkörpern. Die Erfindung kann weiterhin vorteilhaft zum Datentransfer bei bemannten Flugkörpern der allgemeinen und militärischen Luftfahrt Verwendung finden. Erfindungsgemäß weist der Flugkörper zumindest eine Kommunikationseinrichtung (Data Link Gerät DLG) zur Datenübertragung auf, die über eine Satellitenverbindung mit mindestens einer der Bodenstation zugeordneten Sende- und Empfangseinrichtung oder der Kommunikationseinrichtung eines weiteren Flugkörpers kommuniziert.

Nach der Erfindung wird in jedem Übertragungssystem und insbesondere im Flugzeugsystem ein Sendemodul zum Versenden der Zeichenketten über Satelliten verwendet, das derart eingerichtet ist, dass die Zeichenketten mit einem Code versehen werden und die Zeichenketten zur nächsten Übertragungsstation solange versendet werden, bis dieser Code oder ein von diesem abgeleiteter Code von der jeweils nächsten Übertragungsstation, also z.B. einem Satelliten oder einer Bodenstation, zurückgesendet wird. Die Weiterleitung von einer zur jeweils nächsten Übertragungsstation erfolgt nach einem Ausführungsbeispiel mit demselben Übertragungsprotokoll. Nach einem weiteren Ausführungsbeispiel erfolgt zusätzlich die Weiterleitung von einer zur jeweils nächsten Übertragungsstation dann, wenn diese ihre Empfangsbestätigung an die jeweils vorige Übertragungsstation gesendet hat.

Gemäß einem Ausführungsbeispiel der Erfindung erfolgt der Datentransfer zwischen dem Flugkörper und der Bodenstation oder zwischen zumindest zwei Flugkörpern mittels einer standardisierten Satelliteninfrastruktur, beispielsweise dem Iridium- oder Globalstar-Satellitensystem. Bei derartigen Systemen sind die einzelnen Satelliten untereinander durch Intersatelliten-Links (ISLs) verbunden. Eine aktive Verbindung, bzw. eine in Sendung befindliche Nachricht, wird so lange von Satellit zu Satellit vermittelt, bis sich jeweils zumindest einer dieser Satelliten in der Reichweite der Basisstation und des Flugkörpers bzw. bei mehreren Flugkörpern jeweils zumindest einer in Reichweite jedes Flugkörpers befindet. Insbesondere der Iridium-Data-Link ist ein kostengünstiger und zuverlässiger Daten-Link für Daten-Downlink (Flugkörper zur Bodenstation), Daten-Uplink (Bodenstation zum Flugkörper) und für eine bidirektionale Datenverbindung (freier Datentransfer zwischen Flugkörper und Bodenstation). Weiterhin ist eine einfache oder bidirektionale Datenverbindung zwischen zwei oder mehreren Flugkörpern mittels Iridium-Data-Link möglich.

Erfindungsgemäß kann der Datentransfer in einem standardisierten Datenprotokoll erfolgen. Das Datenprotokoll ist bei einem Ausführungsbeispiel der Erfindung ein Paketvermittelndes Protokoll, insbesondere ein Short-Message-Datenprotokoll. Die Datenprotokolle Short Message Service (SMS), Multimedia Message Service (MMS) oder Short Burst Data (SBD) Service haben sich als besonders geeignet erwiesen. Bei der Übertragung von SMS-, MMS- oder SBD-Nachrichten ist eine kurzzeitige Verbindung zwischen Flugkörper und Satellit bzw. zwischen Bodenstation und Satellit ausreichend, wobei die Datenpakete solange gesendet werden, bis diese beim Empfänger ankommen, so dass eine hohe Zuverlässigkeit der Datenübertragung erreicht wird.

Die Kommunikationseinrichtung des Flugkörpers ist bei einer Ausführung der Erfindung mit zumindest einer Steuerkomponente des Flugkörpers, beispielsweise einem Bordrechner (z.B. Central-Weapon-Computer) über den Datenbus des Flugkörpers (z.B. IMBUS) verbunden. Über diese Schnittstellen kann die Kommunikationseinrichtung mit Daten für die Telemetrierung versorgt werden, die vollständig oder selektiert für die Datenübertragung aufbereitet sind oder von der Kommunikationseinrichtung aufbereitet werden. Hierbei kann zu definierten Zeitzyklen, Wegpunkten, flugkörperinternen Ereignissen oder auf Anfrage durch die Bodenstation der aktuelle Datensatz zu einem Short Message Datenprotokoll (z.B. SMS, MMS, SBD) konformen Datensatz (z. B. Protocol Data Unit - PDU) umgewandelt und gesendet werden. Erfindungsgemäß wird es bevorzugt, wenn die Kommunikationsvorrichtung und/oder die Bodenstation ein Verschlüsselungssystem zur Verschlüsselung der zu übertragenden Daten aufweist. Die zu übertragenden Daten können der Kommunikationseinrichtung verschlüsselt übergeben oder von dieser verschlüsselt werden.

Die zwischen dem Flugkörper und der Bodenstation oder zwischen zumindest zwei Flugkörpern mittels einer Satellitenverbindung zu übertragenden Daten enthalten vorzugsweise Flugkörperstatusdaten und/oder Flugkörperkommandos, insbesondere Flugplanungsdaten, Zielvorgabedaten, Wegpunkte und/oder Bilddaten. Das heißt, das Kommunikationssystem ermöglicht die Übermittlung von Flugkörper-Statusdaten oder Kommandos, einschließlich modifizierter Flugplanung, Zielvorgabe und Bildübertragung. Bilddaten können als in der Kommunikationsvorrichtung komprimierte Einzelbilder (Still Pictures) übertragen werden. Weiterhin können zusätzliche Informationen wie beispielsweise Kennungen (Punkte, Linien, Symbole oder Texte) in das Bild eingebracht werden. Ferner ist eine Übertragung von Film- und Tonsequenzen möglich.

Generell werden die Module oder Funktionen als in Verbindung stehend oder miteinander verbunden bezeichnet, was bedeutet, dass diese funktional in Verbindung stehen über eine Signalleitung oder eine Datenleitung die in verschiedenen Technologien ausgebildet sein kann. Die Signalleitungen können generell auch Daten oder Busleitungen sein.

Erfindungsgemäß ist ein Kommunikationssystem eines Flugzeugs zum Datentransfer zwischen zumindest dem Flugzeug und einem weiteren externen Kommunikationspartner vorgesehen, aufweisend:
■ ein Empfangsmodul zum Empfang von Zeichenketten mit Kommandos und/oder Daten über eine Antenne,
■ ein Analysemodul mit einer Identifikationsfunktion zur Identifikation von Kommandos und Daten und mit einer Ausgabefunktion zur Ausgabe von Kommandos und/oder Daten an zugeordnete Funktionsmodule,
■ eine Datenbus-Schnittstelle zur Kopplung des Daten-Analysemoduls an einen Flugzeug-Systembus,
■ ein mit dem Analysemodul verbundenes Bestätigungsmodul zum Erzeugen einer Bestätigungsmeldung, die den Eingang einer Zeichenkette betätigt,
■ ein mit dem Analysemodul verbundenes Flugdaten-Ausgabemodul,
■ ein Formatierungsmodul, das mit dem Flugdaten-Ausgabemodul und dem Bestätigungsmodul verbunden ist und das eine Funktion zur Erzeugung von Zeichenketten in Form eines vorgegebenen Protokolls aufweist,
■ ein Sendemodul zum Versenden der Zeichenketten über Satelliten, wobei das Sendemodul derart eingereichtet ist, dass die Zeichenketten mit einem Code versehen werden und die Zeichenketten solange versendet werden, bis diese Code oder ein von diesem abgeleiteter Code von einem Satelliten zurückgesendet wird,
wobei die Identifikationsfunktion des Daten-Analysemoduls Kommandos und/oder Daten hinsichtlich ihres Adressaten identifiziert und die Ausgabefunktion die Kommandos und/oder Daten je nach dem identifizierten Adressaten an die Datenbus-Schnittstelle, das Flugdaten-Ausgabemodul oder das Bestätigungsmodul sendet.

Dabei kann das Flugdaten-Ausgabemodul eine Funktion aufweisen, das auf ein von dem Analysemodul empfangenes Flugdaten-Ausgabekommando einen aktuellen Satz von Flugdaten an das Formatierungsmodul sendet.

Nach einem weiteren Ausführungsbeispiel kann alternativ oder zusätzlich das Analysemodul derart gestaltet sein, dass dieses eines der folgenden Kommandos und/oder Daten identifiziert und an den Datenbus sendet:
■ ein Kommando zum Aktivieren oder Deaktivieren einer Sensorik zur Erfassung von Missionsdaten,
■ ein Kommando zum Aktivieren einer Flugdaten-Aktualisierungsfunktion zur Erzeugung von aktuellen Flugdaten mittels einer Sensorik
■ ein Sollflugbahn-Änderungskommando und Flugdaten zur Definition von Flugbahn-Vorgaben,
■ ein Flugzeug-Selbstzerstörungskommando.

Die Missionsdaten können Informationen über am Boden befindliche Objekte umfassen.

Alternativ oder zusätzlich kann das Steuerungs- und Missionssystem oder das Flugzeugsystem eine Flugdaten-Aktualisierungsfunktion aufweisen, die auf ein von dem Datenbus empfangenes Kommando zur Erzeugung von aktuellen Flugdaten mittels einer Sensorik aktuelle Flugdaten erzeugt und aktuelle Flugdaten in einem vorbestimmten Ablauf in den Datenbus einspeist, so dass jeweils aktuelle Flugdaten von dem Flugdaten-Ausgabemodul empfangen werden und an das Formatierungsmodul gesendet werden. Dabei können insbesondere die Flugdaten die Position des Flugzeugs und/oder Fluglage-Informationen des Flugzeugs umfassen.

Das Steuerungs- und Missionssystem oder das Flugzeugsystem kann ein Autopilotenfunktion mit einer Schnittstelle zu dem Datenbus aufweisen, die aufgrund von Flugbahn-Vorgaben eine Soll-Flugbahn und Steuerungskommandos erzeugt, mit denen das Flugzeug entlang der Soll-Flugbahn gesteuert wird, und die aufgrund eines Sollflugbahn-Änderungskommandos von dem Datenbus Flugbahn-Vorgaben empfängt und die Steuerungskommandos aufgrund dieser empfangenen Flugbahn-Vorgaben Steuerungskommandos aufgrund der veränderten Soll-Flugbahn erzeugt.

Der Erfindung zufolge ist auch ein Flugzeug mit einem Kommunikationssystem nach einem der erfindungsgemäßen Ausführungsbeispiele vorgesehen. Dabei kann das Steuerungs- und Missionssystem insbesondere eine Missionsdaten-Aktualisierungsfunktion aufweisen, die auf ein von dem Datenbus empfangenes Kommando zur Erzeugung von aktuellen Missionsdaten mittels einer Sensorik aktuelle Missionsdaten erzeugt und aktuelle Missionsdaten in einem vorbestimmten Ablauf in den Datenbus einspeist. Mit dem Daten-Filter steht ein mit dem Formatierungsmodul verbundenes Missionsdaten-Ausgabemodul in Verbindung, so dass jeweils aktuelle Flugdaten von dem Flugdaten-Ausgabemodul empfangen werden und an das Formatierungsmodul gesendet werden. Insbesondere können die Missionsdaten Aufklärungsdaten des Flugzeugs und dabei Sensordaten wie z.B. Radardaten oder Daten eines optischen Sensors umfassen.

Nach der Erfindung ist weiterhin ein Verfahren zur Kommunikation eines Flugzeugssystems mit einem externen Kommunikationspartner über Satelliten vorgesehen, aufweisend die Schritte:
■ Empfangen von Zeichenketten mit Kommandos und/oder Daten in einem Empfangsmodul des Flugzeugsystems,
■ Identifikation von Kommandos und Daten und Ausgabe von Kommandos und/oder Daten an zugeordnete Funktionsmodule oder einen Datenbus,
■ Versenden von Zeichenketten über ein Sendemodul an den externen Kommunikationspartner über Satelliten, wobei die Zeichenketten mit einem Code versehen werden und die Zeichenketten solange versendet werden, bis diese Code oder ein von diesem abgeleiteter Code von einem Satelliten zurückgesendet wird,
wobei:
■ auf Empfang einer Zeichenkette eine Identifizierung von Kommandos und/oder Daten hinsichtlich ihrer Funktion und ein Senden von Kommandos und/oder Daten je nach der identifizierten Funktion an den Datenbus, ein Flugdaten-Ausgabemodul oder ein Bestätigungsmodul erfolgt,
■ auf Empfang eines Kommandos zum Versenden einer Bestätigungsmeldung in dem Empfangsmodul Erzeugung einer Bestätigungsmeldung und Versenden derselben über das Sendemodul und über Satelliten an externe Kommunikationspartner,
■ auf Empfang eines Kommandos zum Versenden von Flugdaten in vorgegebenen Abständen Senden dieses Kommandos an den Datenbus, Ermittlung der Flugdaten durch eine Sensorik, übermitteln der erfassten Flugdaten in den vorgegebenen Abständen über den Systembus an das Flugdaten-Ausgabemodul und Versenden derselben über das Sendemodul und über Satelliten an externe Kommunikationspartner,
■ auf Empfang eines Kommandos zum Versenden von aktuellen Flugdaten Senden eines Kommandos an ein Flugdaten-Ausgabemodul und Übermitteln den in dem Flugdaten-Ausgabemodul vorliegenden aktuellen Flugdatensatz oder den nächsten von dem Flugdaten-Ausgabemodul empfangenen Flugdatensatz über das Sendemodul und über Satelliten an externe Kommunikationspartner.

Bei dem erfindungsgemäßen Verfahren zur Kommunikation eines Flugzeugssystems eines Flugzeugs mit einem externen Kommunikationspartner über Satelliten ist auf Empfang eines Kommandos zur Ausführung von Steuerungsbewegungen des Flugzeugs ein Übermitteln dieses Kommandos über den Datenbus an eine Aktuatorik des Flugzeugs zur Ausübung der kommandierten Steuerungsbewegungen.

Alternativ oder zusätzlich kann vorgesehen sein: auf Empfang eines Kommandos zur Änderung des Sollpfads des Flugzeugs ein Übermitteln dieses Kommandos und von Flugpfad-Vorgaben über den Datenbus an ein Steuerungs- und Missionssystem und Überschreiben der bisher gespeicherten Flugpfad-Vorgaben.

Weiterhin kann bei dem Verfahren alternativ oder zusätzlich vorgesehen sein: auf Empfang eines Kommandos zum Erzeugen und Übermitteln von Sensordaten durch das Flugzeugssystem Übermitteln dieses Kommandos über den Datenbus an eine Sensorik, Erzeugen von Sensordaten, Senden der erzeugten Sensordaten über den Datenbus an ein Missionsdaten-Ausgabemodul und Übermitteln der Sensordaten über das Sendemodul und über Satelliten an externe Kommunikationspartner.

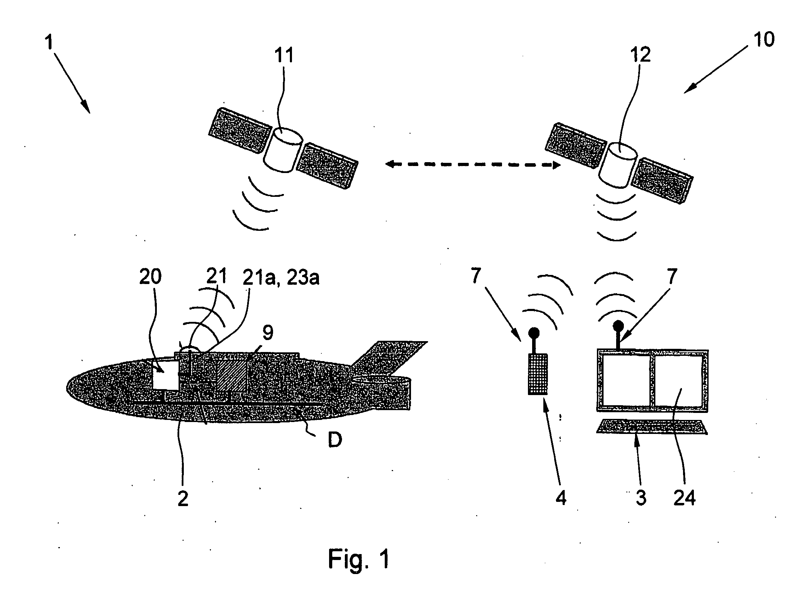

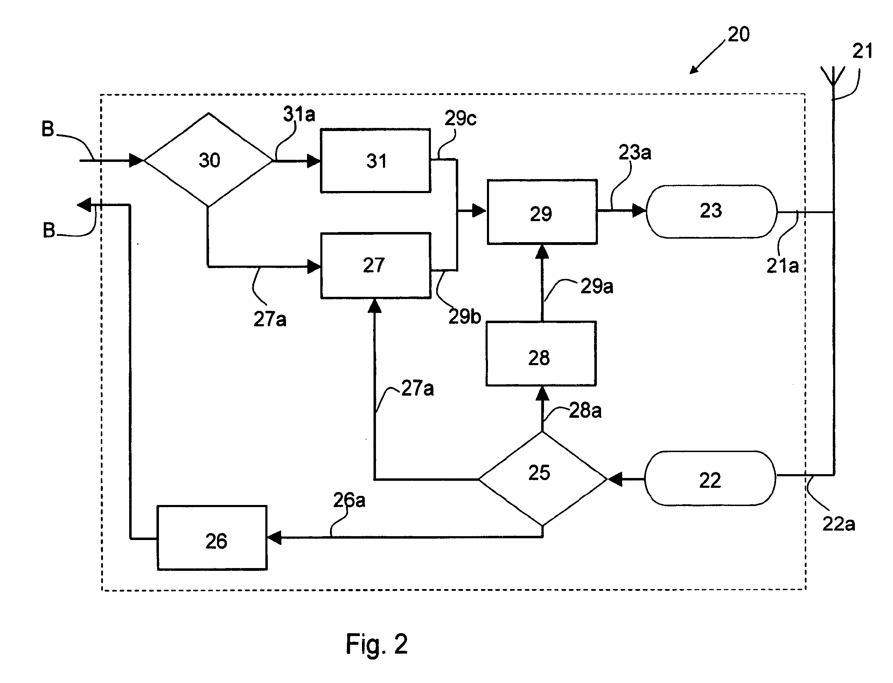

Im Folgenden werden Ausführungsbeispiele der Erfindung anhand der beiliegenden Figuren beschrieben, die zeigen:
■ Figur 1 eine schematische Darstellung einer Anordnung von Kommunikationspartnern mit einem Flugzeug mit dem erfindungsgemäßen Onboard-Kommunikationssystem, einer Bodenstation und einem Mobiltelefon, sowie zwei Satelliten, über die die Kommunikationspartner erfindungsgemäß kommunizieren; und
■ Figur 2 eine funktionale Darstellung einer Ausführungsform des erfindungsgemäßen Kommunikationssystems.

Die Figur 1 zeigt eine Anordnung 1 aus einem Flugzeug 2, einer Bodenstation 3, einem Satelliten-Telefongerät 4, die Kommunikationspartner bei dem erfindungsgemäßen Kommunikationsverfahren sein können. Das Flugzeug kann ein Fluggerät, ein Flugkörper und dabei insbesondere ein Lenkflugkörper oder eine Drohne sein. Das Flugzeug kann also ein unbemanntes Flugzeug und insbesondere ein Lenkflugkörper sein. Das erfindungsgemäße Kommunikationssystem ist in einem Flugzeug 2 als Onboard-System integriert. Weiterhin zeigt die Figur 1 symbolisch eine Satelliten-Konstellation 10 aus einem ersten Satelliten 11 und einem zweiten Satelliten 12, da das erfindungsgemäße Kommunikationsverfahren über Satelliten erfolgt. Die Kommunikation oder der Datentransfer kann dabei insbesondere mittels einer standardisierten Satelliteninfrastruktur, vorzugsweise einem Iridium- oder Globalstar-Satellitensystem erfolgen.

Das Fluggerät 2 weist ein Kommunikations-Modul oder ein Kommunikationssystem 20 auf, das als Kommunikationseinrichtung für den Empfang und das Senden von Zeichenketten oder Daten von bzw. zu einem externen Kommunikationspartner über Satelliten dient. Das Kommunikationssystem 20 weist eine Sende-Empfänger-Antenne 21 auf, an die über eine Verbindungsleitung 22a ein Empfangsmodul 22 und über eine Verbindungsleitung 23a ein Sendemodul 23 angekoppelt sind. Das Kommunikationssystem 20 weist Schnittstellen 26, 30 zu einem Datenbus oder Flugzeug-Systembus B auf, über den das Kommunikationssystem 20 mit einem Steuerungs- und Missionssystem oder eines Avioniksystems des Flugzeugs 2 funktional in Verbindung steht.

Das Kommunikationssystem 20 weist auf:
■ ein Empfangsmodul 22 zum Empfang von Zeichenketten mit Kommandos und/oder Daten über eine Antenne 21,
■ ein Analysemodul 25 mit einer Identifikationsfunktion zur Identifikation von Kommandos und Daten und mit einer Ausgabefunktion zur Ausgabe von Kommandos und/oder Daten an zugeordnete Funktionsmodule,
■ eine Datenbus-Schnittstelle zur Kopplung des Daten-Analysemoduls 25 an den Flugzeug-Systembus B,
■ ein mit dem Analysemodul 25 verbundenes Bestätigungsmodul 28 zum Erzeugen einer Bestätigungsmeldung, die den Eingang einer Zeichenkette betätigt,
■ ein mit dem Analysemodul 25 verbundenes Flugdaten-Ausgabemodul 27,
■ ein Formatierungsmodul 29, das mit dem Flugdaten-Ausgabemodul 27 und dem Bestätigungsmodul 28 verbunden ist und das eine Funktion zur Erzeugung von Zeichenketten in Form eines vorgegebenen Protokolls aufweist,
■ ein Sendemodul 23 zum Versenden der Zeichenketten über Satelliten, wobei das Sendemodul 23 derart eingereichtet ist, dass die Zeichenketten mit einem Code versehen werden und die Zeichenketten solange versendet werden, bis diese Code oder ein von diesem abgeleiteter Code von einem Satelliten zurückgesendet wird.

Die Identifikationsfunktion zur Identifikation von Kommandos und Daten des Analysemoduls 25 erkennt bestimmte Arten von Kommandos, d.h. an welcher Stelle diese weitergegeben werden müssen. Weiterhin kann die Identifikationsfunktion derart beschaffen sein, dass diese auch Arten von Daten erkennen kann, die an ein Modul oder das Steuerungs- und Missionssystem oder ein eine Funktion oder eine Sensorik desselben zu übertragen ist. Die Identifikationsfunktion des Daten-Analysemoduls 25 ist somit in der Lage Kommandos und/oder Daten hinsichtlich ihres Adressaten zu identifizieren und die Ausgabefunktion die Kommandos und/oder Daten je nach dem identifizierten Adressaten an die Datenbus-Schnittstelle 26, das Flugdaten-Ausgabemodul 27 oder das Bestätigungsmodul 28 zu senden.

In dem Formatierungsmodul 29 werden die über das Sendemodul zu sendenden Datenströme gemäß einem vorbestimmten Protokoll in Zeichenketten umgewandelt und optional auch verschlüsselt. Das Übermittlungsprotokoll oder das Datenprotokoll kann dabei ein PDU-Protokoll oder ein Paket-vermittelndes Protokoll sein. Dadurch kann der Datentransfer in einem standardisierten Datenprotokoll erfolgen. Dabei kann vorgesehen sein, dass eine SMS-, eine MMS- oder eine SBD-Zeichenkette übertragen wird. Dementsprechend kann das Sendemodul 23 ein Satellitenmodem zur Datenübertragung über Satelliten mittels einer Modemverbindung aufweisen. Dadurch kann das erfindungsgemäße Kommunikationssystem insbesondere von einer Bodenstation 3 mit einem Mobilfunksystem oder insbesondere einem Mobiltelefon 4 über eine Satellitenverbindung kommunizieren. Auf diese Weise kann das Flugzeug 2 gesteuert und derart kommandiert werden, dass dieses vorbestimmte Arten von Daten an einen externen Kommunikationspartner und insbesondere eine solche Bodenstation übermittelt.

Das Sendemodul 23 sendet über einen Satelliten zu einem externen Kommunikationspartner, der eine Bodenstation oder ein anderes Fluggerät oder Flugzeug sein kann, und der Daten angefordert hatte oder an den gemäß einer Voreinstellung des Kommunikationssystems Daten zu senden sind. Dies gilt auch umgekehrt. Zu dem Sendeprozess an den Satelliten gehört eine Bestätigungsmeldung, die das Sendemodul 23 von dem Satelliten erhält, wenn dieser den gesendeten Daten-String empfangen hat. Dies erfolgt über einen "Handshake". Dieser kann derart gestaltet sein, dass der jeweils empfange Satellit aus einer Zahlenkombination ein Quersummer ermittelt und diese an das ursprünglich sendende Fluggerät, oder generell an den ursprünglich sendenden Kommunikationspartner übermittelt. Der jeweils sendende Kommunikationspartner ist derart eingerichtet, dass dieser solange das Absenden eines Daten-Strings wiederholt, bis diese die Empfangsnachricht oder die Bestätigung von dem jeweils empfangenden Satelliten empfangen hat.

Mit dem Empfangsmodul 22 ist ein Daten-Analysemodul 25 zur Analyse des von dem Empfangsmodul 22 empfangenen Datenstroms und der darin enthaltenen Datenstrings oder Zeichenketten verbunden. Das Daten-Analysemodul 25 steht über eine Verbindungsleitung 26a mit dem zentralen System- oder Datenbus B in Verbindung. Hierzu kann die Verbindungsleitung 26a an eine Datenbus-Schnittstelle 26 angekoppelt sein, in der die von dem Analysemodul 25 gesendeten Kommandos und/oder Daten, die dazu vorgesehen sind, in ein dem Protokoll des Datenbusses D entsprechendes Format gebracht werden und mit der diese in den Datenbus D eingespeist werden. Weiterhin steht das Analysemodul 25 über eine Verbindungsleitung 27a mit einem Positionsdaten-Ausgabe oder -Verarbeitungsmodul 27 und über eine Verbindungsleitung 28a mit einem Bestätigungsmodul 28 in Verbindung.

Das Bestätigungsmodul 28 ist über eine Verbindungs- oder Signalleitung 29a mit einem Daten-Aufbereitungsmodul 30 verbunden. In einer Formatierungsfunktion dieses Modul werden dessen Eingangsdaten in ein vorgegebenes Protokoll formatiert und in eine Zeichenkette oder einen Daten-String umgewandelt, der zur Übertragung vorgesehen mittels des Sendemoduls 23 vorgesehen ist. Das Formatierungsmodul 29 weist weiterhin eine Ausgabe-Funktion auf, mit der die in der Formatierungsfunktion des Daten-Aufbereitungsmoduls 29 erstellten Zeichenketten über die Verbindungs- oder Signalleitung 23a an das Sendemodul 23 geschickt werden, durch das die Versendung desselben mittels der Antenne 21 erfolgt.

Das Flugdaten-Ausgabemodul 27 erhält über eine Verbindungs- oder Signalleitung 27a von dem Systembus B Flugdaten wie z.B. Positionsdaten und/oder Lagedaten des Fluggeräts als Eingangsdaten. Die Flugdaten des Fluggeräts werden in einem Daten-Filter 30 identifiziert und über die Verbindungs- oder Signalleitung 27a an das Flugdaten-Verarbeitungsmodul 27 übermittelt. Dabei ist vorgesehen, dass das Steuerungs- und Missionssystem eine Funktion aufweist, die auf Empfang eines Kommandos Flugdaten in vorgegebenen Abständen erzeugt und diese über den Systembus B an das Flugdaten-Ausgabemodul 27 sendet. Die regelmäßigen Abstände können Zeitabstände sein, die gleichbleibend oder von der Flugphase abhängig sein können. Weiterhin können die Abstände durch aufeinanderfolgende, für eine Flugphase oder eine Flugbahn vorbestimmte Wegstrecken sein. Aufgrund des Sendens eines Kommandos an den Datenbus zur Übermittlung von Flugdaten in vorgegebenen Abständen, gelangt dieses Kommando zu dem Steuerungs- und Missionssystem, das dann diese Flugdaten durch eine Sensorik ermittelt und die in den vorbestimmten Abständen erfassten Flugdaten über den Systembus B an das Flugdaten-Ausgabemodul 27 übermittelt. Daraufhin erfolgt ein Versenden derselben über das Sendemodul 23 und über Satelliten an externe Kommunikationspartner.

Die Flugdaten können insbesondere Positionsdaten, d.h. geographische Höhe und breite und optional auch die Höhe, und Fluglagedaten sein, die die aktuelle Fluglage des Flugzeugs 2 beschreiben. Die Fluglagedaten können insbesondere der Neigungswinkel um die Querachse und/oder der Rollwinkel sein.

Weiterhin kann das Kommunikationssystem 20 ein Missionsdaten-Verarbeitungsmodul 31 aufweisen, das über eine Verbindungs- oder Signalleitung 31a mit dem Daten-Filter 30 in Verbindung steht. Das Flugdaten-Verarbeitungsmodul 27 und das Missionsdaten-Verarbeitungsmodul 31 stehen jeweils mit einer Verbindungs- oder Signalleitung 29b bzw. 29c in Verbindung. Das Avioniksystem des Fluggeräts kann ein Steuerungsmodul und ein Missionserfüllungsmodul oder Missionsmodul aufweisen. Dem Steuerungsmodul und dem Missionsmodul ist eine Sensorik oder ein Sensorsystem zugeordnet (nicht gezeigt), von dem das Steuerungsmodul und das Missionsmodul oder das Steuerungs- und Missionssystem Sensordaten empfängt. Die Sensordaten können Flugdaten oder andere Sensordaten, die zur Missionserfüllung beitragen, sein. Zur Missionserfüllung beitragende Sensordaten können Aufklärungsdaten sein, die z.B. mittels eines Radars oder eines Infrarot-Sensors ermittelt werden.

Somit kann auf Empfang eines Kommandos zum Erzeugen und Übermitteln von Sensordaten durch das Flugzeugssystem 2 durch das Analysemodul 25 ein Übermitteln dieses Kommandos über den Datenbus B an eine zur Missionserfüllung beitragende Sensorik, ein Erzeugen von Sensordaten durch diese Sensorik, ein Senden der erzeugten Sensordaten über den Datenbus B an das Missionsdaten-Ausgabemodul 31 und ein Übermitteln der Sensordaten über das Sendemodul 23 und über Satelliten an externe Kommunikationspartner erfolgen.

Das Steuerungsmodul des Steuerungs- und Missionssystems steht mit Aktuatoren in Verbindung und ist in der Lage, diese anzusteuern. Die Aktuatoren sind insbesondere Aktuatoren zur Betätigung von Stellklappen des Flugkörpers. Weiterhin kann vorgesehen sein, dass das Steuerungsmodul den Antrieb des Flugkörpers ansteuern kann, um den Antriebsschub zu verändern. Auf Empfang eines Kommandos zum Steuern des Flugzeugs, d.h. zur Ausführung von Steuerungsbewegungen der Steuerklappen des Flugzeugs 2 werden diese Art von Kommandos von dem Analysemodul 25 erkannt und über den Datenbus B an ein Steuerungsmodul gesendet, der diese Kommandos in unveränderter oder systembedingt modifizierter Form an eine Aktuatorik des Flugzeugs zur Ausübung der kommandierten Steuerungsbewegungen übermittelt. Die Kommandos können Soll-Richtungen oder Soll-Beschleunigungen des Flugzeugs 2 in den drei Raum-Koordinaten umfassen. Alternativ kann vorgesehen sein, dass die Kommandos direkt an die Aktuatorik des Flugzeugs zur Ausübung der kommandierten Steuerungsbewegungen übermittelt werden, wenn die Aktuatorik z.B. mit einer Regelungsvorrichtung, geeignet ist, die Kommandos z.B. in Form von Soll-Positionen direkt zu empfangen und zu verarbeiten.

Mit der Steuerungsfunktion kann auf der Basis von Steuerungskommandos die Steuerung des Fluggeräts vorgenommen werden, die vorgegeben und in der Steuerungsfunktion abgespeichert sein können oder mit der Datenbus-Schnittstelle 26 an die Steuerungsfunktion übermittelt werden können. Die Aktuatoren für die Steuerung des Fluggeräts können zur ihrer Betätigung über den Datenbus angesteuert werden oder können über gesonderte Signalleitungen, die die Akuatoren und ein entsprechendes Steuerungsmodul verbinden, angesteuert werden. Auf diese Weise können Steuerungskommandos über die Antenne 21 und das Empfangsmodul 22 in das Daten-Analysemodul 25 gelangen, die dort als Steuerungskommandos für das Fluggerät mittels eines Identifikationscodes oder eines Schlüsselwortes identifiziert werden und daraufhin über die Datenbus-Schnittstelle 26 an das Steuerungsmodul zur Weitersendung an die Aktuatoren oder direkt an die Aktuatoren zu deren Betätigung gesendet werden. Dabei können Steuerungskommandos an die Steuerungsfunktion oder über den Datenbus direkt an die Aktuatoren übermittelt werden, um diese zu betätigen und dadurch das Fluggerät zu steuern. Dadurch kann das Fluggerät durch die Übermittlung über die Antenne 21 gesteuert werden.

Weiterhin kann vorgesehen sein, dass entsprechende Kommandos, die von dem Analysemodul 25 in ihrer Art erkannt werden, über den Datenbus B an ein Missionsmodul oder das Steuerungs- und Missionssystem übermittelt werden können, wobei die Kommandos zur Ansteuerung von Sensoren vorgesehen sind. Das Missionsmodul oder das Steuerungs- und Missionssystem steuert mit diesen Kommandos die entsprechende Sensorik an. Dabei kann vorgesehen sein, dass das Missionsmodul oder das Steuerungs- und Missionssystem auch die Sensorik auswählt, die die Daten erzeugt, die gemäß der jeweiligen Kommandos angefordert werden. In einem anderen Ausführungsbeispiel kann vorgesehen sein, dass solche Sensor-Kommandos auch direkt and die entsprechende Sensorik gesendet werden und diese direkt über die Kommandos angesteuert werden, wenn die Sensorik eine entsprechende Stellvorrichtung aufweist. Dies kann insbesondere z.B. zur Steuerung der Ausrichtung einer Kamera oder eines anderen Sensors direkt von einem Kommunikationspartner wie einer Bodenstation vorgesehen sein. Weiterhin kann das Steuerungs- und Missionssystem derart eingerichtet sein, dass dieses ein Kommando zum Einschalten oder Ausschalten eines Sensors oder eines Aktuators verarbeiten kann, so dass der Sensor oder der Aktuator ein- oder ausgeschaltet werden können. In einem anderen Ausführungsbeispiel kann mittels eines entsprechenden Kommandos ein Aufklärungssensor wie z.B. ein Radargerät eingeschaltet werden, um Objekte zu erkennen oder ein Radargerät ausgeschaltet werden, um die Erkennbarkeit des Systems zu minimieren. Der Aktautor kann in einem Ausführungsbeispiel eine Selbstzerstörungs-Vorrichtung zur Zerstörung des Flugzeugs 2 sein, die vom Missionsmodul oder direkt über den Datenbus B angesteuert werden kann und die das Fluggerät zerstört, wenn das Analysemodul 25 ein solches Kommando in seiner Art erkennt und über den Datenbus B ein entsprechendes Kommando an die Selbstzerstörungs-Vorrichtung sendet und diese das Selbstzerstörungs-Kommando empfängt.

Das Analysemodul 25 ist derart eingerichtet, dass in diesem verschiedene verschiedenartige Kommandos insbesondere mittels jeweils eines Identifikationscodes oder eines Schlüsselwortes identifiziert werden und gezielt über eine von drei Leitungen verwendet werden. Eine Gruppe von Kommandos wird an den Datenbus gesendet, der Kommandos zur weiteren Verarbeitung durch die Aktuatoren oder Betätigungsvorrichtungen oder eine Sensorik an die Flugsteuerung oder das Missionsmodul weiterleitet. Alternativ bei allen oder einzelnen Kommandos kann vorgesehen sein, dass diese direkt an Aktuatoren oder Betätigungsvorrichtungen gesendet werden.

Zu den Kommandos, die zur Datenbus-Schnittstelle gesendet werden, gehören das Einschalten und das Ausschalten der Funktion zur Erzeugung von regelmäßigen Flugdaten-Informationen. Diese können in regelmäßigen Zeitabständen Position und Zeitpunkt und optional Fluglage-Informationen liefern. Alternativ kann an vorgegebenen Wegpunkten oder geflogenen Streckenabschnitten Position und Zeitpunkt und optional Fluglageinformationen geliefert werden. Wenn diese Funktion eingeschaltet ist, liefert diese in der vorgegebenen Regelmäßigkeit diese Fluginformationen, die über den Datenbus B gesendet werden, im Daten-Filter 30 identifiziert werden und daraufhin über das Flugdaten-Ausgabemodul 27 an das Datenaufbereitungsmodul 29 an einen Kommunikationspartner versendet werden. Das Analysemodul 25 erkennt an Schlüsselwörtern, ob der Inhalt des empfangenen Daten-Strings Kommandos und/oder Inhalte hat, die an den Datenbus D und in das Steuerungs- und Missionssystem geschickt werden sollen. Dabei kann vorgesehen sein, dass die Daten-Strings in das Steuerungs- und Missionssystem oder einen zentralen Rechner dieses Systems oder direkt an die Sensoren oder Aktuatoren gesendet werden.

In dem Daten-Filter 30 werden Kommandos erkannt, die Flugdaten-Informationen darstellen und über den Datenbus B übermittelt werden, und zweigt diese Daten aus der jeweiligen Datenkette ab oder liest diese aus. Wenn Daten vom Empfangsmodul 22 an das Daten-Analysemodul 25 gesendet werden, die Positionsinformationen und/oder Fluglageinformationen sofort verlangen, so wird dies in einem entsprechenden Schlüsselwort diese Kommandos oder dem Daten-String, das in das Analysemodul 25 gelangt, erkannt. Das Kommando wird direkt an das Flugdaten-Ausgabemodul 27 gesendet, das bei Empfang die bereits über den Daten-Filter 30 in das Flugdaten-Ausgabemodul 27 gelangten oder alternativ die zum nächsten Zeitpunkt in das Flugdaten-Ausgabemodul gelangenden Daten an das Formatierungsmodul 29 zum Versenden durch das Sendemodul 23 übermittelt. Auf diese Weise erfolgt auf die von dem Analysemodul 25 empfangenen Kommandos zum Senden von Flugdaten auf direkte Weise ein Übermitteln dieser Flugdaten an einen externen Kommunikationspartner.

Das Daten-Analysemodul 25 ist weiterhin darauf eingerichtet, Kommandos von empfangenen Daten-Strings zu identifizieren, nach denen eine Bestätigungsmeldung an den jeweils anderen Kommunikationspartner gesendet werden soll. Daraufhin erzeugt das Bestätigungsmodul 28 ein Schlüsselwort. Dabei kann vorgesehen sein, dass dieses Schlüsselwort in einem Verschlüsselungsverfahren erzeugt wird. Alternativ oder zusätzlich kann vorgesehen sein, dass das Schlüsselwort eine Zeitinformation oder auch einen Code enthält, mit der bzw. mit dem das erhaltene Daten-String erkennbar ist eine oder mehrere dieser Bestätigungsmeldungen sendet auf das Kommando, das von dem Analysemodul 25 an das Bestätigungsmodul 28 gesendet wird, das Bestätigungsmodul 28 an das Formatierungsmodul 29, das darauf hin die Bestätigungsmeldung über das Sendemodul 23 versendet.

Bei der Anforderung von Missionsdaten wird dieses Kommando im Analyse-Modul 25 erkannt und an das Steuerungsmodul und ein Missionserfüllungsmodul gesandt, das daraufhin diese Daten erzeugt und über den Datenbus 30 sendet. Der Daten-Filter 30 erkennt dieses Signal oder diese Daten-Strings und ordnet diese de Missionsdaten-Ausgabemodul 31 zu, das diese Daten in vorbestimmte Weise aufbereitet und zum Versenden über den Satelliten dem Sendemodul 23 gesendet werden.

Bei den beschriebenen Ausführungsformen können statt der Verbindungs- oder Signalleitungen auch funktionale Übergaben, die also z.B. programm-intem stattfinden, vorgesehen sein, so dass dabei die miteinander kommunizierenden Module oder Funktionen funktional integriert sind.

Ein Ausführungsbeispiel einer Bodenstation 3 weist eine Sende- und Empfangsvorrichtung und insbesondere ein Sende-/Empfangsmodem7 zur Herstellung der Satellitenverbindung zu dem Flugzeug 2 auf. Weiterhin kann die Bodenstation eine Eingabe- und Anzeigevorrichtung 8 zur Anzeige empfangener Daten des Flugkörpers 2 und Missionsdaten auf. Die Eingabe- und Anzeigevorrichtung 8 kann insbesondere derart gestaltet sein, dass auf einer digitalen Karte die Soll-Flugbahn des Flugzeugs 2 z.B. in Form von Soll-Wegpunkten angezeigt werden kann, eine geänderte Soll-Flugbahn eingegeben werden und zusammen mit einem Kommando zur Änderung der Soll-Flugbahn an das Flugzeug übermittelt werden kann. In ähnlicher Weise kann die Eingabe- und Anzeigevorrichtung 8 derart gestaltet sein, dass mit dieser, optional in Verbindung mit einer angezeigten digitalen Karte Kommandos zur Ausführung von Steuerungsbewegungen an das Kommunikationssystem des Flugzeugs 2 übermittelt werden können, so dass diese Kommandos über das Empfangsmodul 22, das Analysemodul 25 und den Datenbus B an eine Aktuatorik des Flugzeugs zur Ausübung der kommandierten Steuerungsbewegungen übermittelt werden kann. Diese Ausführungsformen können insbesondere bei einem Flugzeug vorgesehen sein, in dem ein Navigationssystem mit einem GPS und/oder einer digitalen Karte integriert ist, wobei vorgesehen sein, dass das Flugzeug und die Bodenstation dieselbe digitale Karte verwenden. Die Bodenstation und/oder das Steuerungs- und Missionssystem können eine Flugbahn-Optimierung aufweisen, so dass diese neue Soll-Flugbahnen generieren können.

Weiterhin kann vorgesehen sein, dass die Bodenstation 3 ein Satellitentelefon 26 aufweist. Dieses kann z.B. vom Boden oder von Flugzeugen aus bedient werden, um mit diesem ein erfindungsgemäßes Kommunikationssystem zu steuern, zu kommandieren und Sensordaten abzurufen.

Der Datentransfer zwischen dem Flugzeug 2 und einer Bodenstation 3 kann mittels einer standardisierten Satelliten-Infrastruktur 10, die symbolisch durch zwei Satelliten 11, 12 dargestellt sind, erfolgen. Dabei kann es sich um eine Satelliten-Anorndung und z.B. um ein Iridium-Satellitensystem handeln, bei dem die einzelnen Satelliten 11, 12 untereinander, wie in der Figur durch einen mit gestrichelter Linie dargestellten Pfeil angedeutet ist, durch Intersatellitenlinks (ISLs) verbunden sind. Eine aktive Verbindung wird so lange von Satellit zu Satellit vermittelt, bis sich einer dieser Satelliten in der Reichweite der Bodenstation 6, 8 und ein Satellit in Reichweite des Flugzeugs 2 befindet. Die Entfernung zwischen Flugkörper 2 und Bodenstation 6, 8 ist dadurch nicht relevant. Insbesondere der Iridium-Data-Link ist ein kostengünstiger Daten-Link für Daten-Downlink insbesondere zwischen Flugzeug 2 und Bodenstation 3, ein Daten-Uplink zwischen Bodenstation 3 und Flugkörper 2 und für eine bidirektionale Datenverbindung zwischen Bodenstation 3 und Flugkörper 2.

Die Datenübertragung erfolgt insbesondere in einem standardisierten, Paketvermittelnden Datenprotokoll, insbesondere einem PDU-Datenprotokoll mittels Short Message Service (SMS), Multimedia Message Service (MMS) oder Short Burst Data (SBD) Service, wobei die Datenpakete solange gesendet werden, bis diese beim Empfänger ankommen, so dass eine hohe Zuverlässigkeit der Datenübertragung erreicht wird.

## Patentansprüche

1. Kommunikationssystem eines Flugzeugs (2) zum Datentransfer von Zeichenketten mit Kommandos zwischen zumindest dem Flugzeug (2) und einem weiteren externen Kommunikationspartner (3, 4) über Satelliten aufweisend:
• ein Empfangsmodul (22) zum Empfang von Zeichenketten über eine Antenne (21),
• ein mit dem Empfangsmodul (22) verbundenes Daten-Analysemodul (25) mit einer Identifikationsfunktion zur Identifikation von Kommandos hinsichtlich ihres Adressanten und mit einer Ausgabefunktion zum Senden der Kommandos je nach ihrem identifizierten Adressaten an eine Datenbus-Schnittstelle (26) oder ein Bestätigungsmodul (28),
wobei die Datenbus-Schnittstelle (26) zur Kopplung des Daten-Analysemoduls (25) an einen Datenbus (B) die vom Analysemodul (25) gesendeten Kommandos in ein dem Datenbus-Protokoll des Datenbus (B) entsprechendes Format bringt und diese in den Datenbus (B) einspeist,
wobei das mit dem Daten-Analysemodul (25) verbundene Bestätigungsmodul (28) derart ausgebildet ist, dass nach Empfang eines Kommandos eine den Eingang einer Zeichenkette bestätigende Bestätigungsmeldung an den jeweils anderen Kommunikationspartner gesendet wird und ein Schlüsselwort erzeugt wird, das einen Code enthält, mit dem eine vom Empfangsmodul empfangene Zeichenkette erkennbar ist,
• ein Formatierungsmodul (29), das mit dem Bestätigungsmodul (28) verbunden ist und dazu ausgebildet ist, die über ein Sendemodul (23) zu sendenden Datenströme gemäß einem Übertragungs-Protokoll in Zeichenketten umzuwandeln,
wobei das Sendemodul (23) zum Versenden der Zeichenketten über Satelliten derart eingerichtet ist, dass die Zeichenketten mit dem Code versehen werden und die Zeichenketten so lange versendet werden, bis dieser von dem Satelliten zurückgesendete Code oder ein von diesem abgeleiteter Code von dem Empfangsmodul (22) empfangen und erkannt wurde.

2. Kommunikationssystem nach Patentanspruch 1, **dadurch gekennzeichnet, dass** das Empfangsmodul (22) und das Sendemodul (23) jeweils derart ausgeführt sind, dass das Kommunikationsmodul (20) die Zeichenketten mit einem paketvermittelnden Protokoll, insbesondere einem Short-Message-Datenprotokoll empfangen und senden kann.

3. Kommunikationssystem nach Patentanspruch 1 oder 2, **dadurch gekennzeichnet, dass** ein mit dem Daten-Analysemodul (25) verbundenes Flugdaten-Ausgabemodul (27) eine Funktion aufweist, das auf ein von dem Daten-Analysemodul (25) empfangenes Flugdaten-Ausgabekommando einen aktuellen Satz von Flugdaten an das Formatierungsmodul (29) sendet.

4. Kommunikationssystem nach einem der voranstehenden Ansprüche, **dadurch gekennzeichnet, dass** das Daten-Analysemodul (25) derart gestaltet ist, dass dieses eines der folgenden Kommandos und/oder Daten identifiziert und an den Datenbus (B) sendet:
■ ein Kommando zum Aktivieren oder Deaktivieren einer Sensorik zur Erfassung von Missionsdaten,
■ ein Kommando zum Aktivieren einer Flugdaten-Aktualisierungsfunktion zur Erzeugung von aktuellen Flugdaten mittels einer Sensorik
■ ein Sollflugbahn-Änderungskommando und Flugdaten zur Definition von Flugbahn-Vorgaben,
■ ein Flugzeug-Selbstzerstörungskommando.

5. Kommunikationssystem nach dem Anspruch 4, **dadurch gekennzeichnet, dass** die Missionsdaten Informationen über am Boden befindliche Objekte umfassen.

6. Flugzeug mit einem Kommunikationssystem (20) nach einem der voranstehenden Ansprüche, mit einem Steuerungs- und Missionssystem und mit einem Datenbus (B), **dadurch gekennzeichnet, dass** das Steuerungs- und Missionssystem eine Flugdaten-Aktualisierungsfunktion aufweist, die auf ein von dem Datenbus (B) empfangenes Kommando zur Erzeugung von aktuellen Flugdaten mittels einer Sensorik aktuelle Flugdaten erzeugt und aktuelle Flugdaten in einem vorbestimmten Ablauf in den Datenbus (B) einspeist, so dass jeweils aktuelle Flugdaten vom Flugdaten-Ausgabemodul empfangen werden und an das Formatierungsmodul (29) gesendet werden.

7. Flugzeug mit einem Kommunikationssystem (20) nach dem Anspruch 6, **dadurch gekennzeichnet, dass** die Flugdaten die Position des Flugzeugs und/oder Fluglage-Informationen des Flugzeugs umfassen.

8. Flugzeug mit einem Kommunikationssystem (20) nach einem der voranstehenden Ansprüche 6 oder 7, **dadurch gekennzeichnet, dass** Autopilotenfunktion mit einer Schnittstelle zu dem Datenbus (B) aufweist, die aufgrund von Flugbahn-Vorgaben eine Soll-Flugbahn und Steuerungskommandos erzeugt, mit denen das Flugzeug entlang der Soll-Flugbahn gesteuert wird, und die aufgrund eines Sollflugbahn-Änderungskommandos von dem Datenbus (B) Flugbahn-Vorgaben empfängt und die Steuerungskommandos aufgrund dieser empfangenen Flugbahn-Vorgaben Steuerungskommandos aufgrund der veränderten Soll-Flugbahn erzeugt.

9. Flugzeug mit einem Kommunikationssystem (20) nach einem der voranstehenden Ansprüche 6 bis 8, **dadurch gekennzeichnet, dass** das Steuerungs- und Missionssystem eine Missionsdaten-Aktualisierungsfunktion aufweist, die auf ein von dem Datenbus (B) empfangenes Kommando zur Erzeugung von aktuellen Missionsdaten mittels einer Sensorik aktuelle Missionsdaten erzeugt und aktuelle Missionsdaten in einem vorbestimmten Ablauf in den Datenbus (B) einspeist, dass mit dem Daten-Filter (3) ein mit dem Formatierungsmodul (29) verbundenes Missionsdaten-Ausgabemodul (31) in Verbindung steht, so dass jeweils aktuelle Flugdaten von dem Flugdaten-Ausgabemodul empfangen werden und an das Formatierungsmodul (29) gesendet werden.

10. Flugzeug mit einem Kommunikationssystem (20) nach dem Anspruch 9, **dadurch gekennzeichnet, dass** die Missionsdaten Aufklärungsdaten des Flugzeugs umfassen.

11. Verfahren zum Datentransfer von Zeichenketten mit Kommandos zwischen zumindest dem Flugzeug (2) und einem weiteren externen Kommunikationspartner (3, 4) über Satelliten, wobei:
■ ein Empfangsmodul (22) Zeichenketten über eine Antenne (21) empfängt,
■ ein mit dem Empfangsmodul (22) verbundenes Daten-Analysemodul (25) mit einer Identifikationsfunktion, welches Kommandos hinsichtlich ihres Adressaten identifiziert, und mit einer Ausgabefunktion, welche Kommandos je nach ihrem identifizierten Adressaten an eine Datenbus-Schnittstelle (26) oder ein Bestätigungsmodul (28) sendet,
wobei die Datenbus-Schnittstelle (26) zur Kopplung des Daten-Analysemoduls (25) an einen Datenbus (B), die von Analysemodul (25) gesendeten Kommandos in ein dem Datenbus-Protokoll des Flugzeug-Datenbus (B) entsprechendes Format bringt und diese in den Datenbus (B) einspeist,
wobei das mit dem Daten-Analysemodul (25) verbundene Bestätigungsmodul (28) nach Empfang eines Kommandos, dass eine den Eingang einer Zeichenkette bestätigende Bestätigungsmeldung an den jeweils anderen Kommunikationspartner gesendet werden soll, ein Schlüsselwort erzeugt, das einen Code enthält, mit dem eine vom Empfangsmodul empfangene Zeichenkette erkennbar ist,
■ ein mit dem Bestätigungsmodul (28) verbundenes Formatierungsmodul (29) die über ein Sendemodul (23) zu sendenden Datenströme gemäß einem Übertragungs-Protokoll in Zeichenketten umwandelt,
wobei das Sendemodul (23) zum Versenden der Zeichenketten über Satelliten bewirkt, dass die Zeichenketten mit dem Code versehen werden und die Zeichenketten mit dem Sendemodul (23) solange versendet werden, bis dieser von dem Satelliten zurückgesendete Code oder ein von diesem abgeleiteter Code von dem Empfangsmodul (22) empfangen und erkannt wurde.

12. Verfahren nach Anspruch 11, **gekennzeichnet durch** Senden und Empfangen der Zeichenketten mit einem paketvermittelnden Protokoll, insbesondere einem Short-Message-Datenprotokoll, **durch** das Empfangsmodul (22) und das Sendemodul (23) des Kommunikationsmoduls (20).

13. Verfahren nach Anspruch 11 oder 12, **gekennzeichnet durch**: auf Empfang eines Kommandos zur Ausführung von Steuerungsbewegungen des Flugzeugs (2) Übermitteln dieses Kommandos über den Datenbus (B) an eine Aktuatorik des Flugzeugs zur Ausübung der kommandierten Steuerungsbewegungen.

14. Verfahren nach Anspruch 11, 12 oder 13, **gekennzeichnet durch**: auf Empfang eines Kommandos zur Änderung des Sollpfads des Flugzeugs (2) Übermitteln dieses Kommandos und von Flugpfad-Vorgaben über den Datenbus (B) an ein Steuerungs- und Missionssystem und Überschreiben der bisher gespeicherten Flugpfad-Vorgaben.

15. Verfahren nach einem der Ansprüche 11 bis 14, **gekennzeichnet durch**: auf Empfang eines Kommandos zum Erzeugen und Übermitteln von Sensordaten **durch** das Flugzeugssystem (2) Übermitteln dieses Kommandos über den Datenbus (B) an eine Sensorik, Erzeugen von Sensordaten, Senden der erzeugten Sensordaten über den Datenbus (B) an ein Missionsdaten-Ausgabemodul (31) und Übermitteln der Sensordaten über das Sendemodul (23) und über Satelliten an externe Kommunikationspartner.

## Claims

1. Communication system of an aircraft (2) for the data transfer of character strings containing commands between at least the aircraft (2) and a further external communication partner (3, 4) via satellites, having:
• a receiving module (22) for receiving character strings via an antenna (21),
• a data analysis module (25) which is connected to the receiving module (22) and has an identification function for identifying commands with respect to their addressee and an output function for transmitting the commands to a data bus interface (26) or a confirmation module (28), depending on their identified addressee,
wherein, in order to couple the data analysis module (25) to a data bus (B), the data bus interface (26) changes the commands transmitted by the analysis module (25) into a format corresponding to the data bus protocol of the data bus (B) and feeds them into the data bus (B),
wherein the confirmation module (28) connected to the data analysis module (25) is designed in such a manner that, after receiving a command, a confirmation message confirming the receipt of a character string is transmitted to the respective other communication partner and a keyword is generated, said keyword containing a code which can be used to identify a character string received by the receiving module,
• a formatting module (29) which is connected to the confirmation module (28) and is designed to convert the data streams to be transmitted via a transmitting module (23) into character strings in accordance with a transmission protocol,
wherein the transmitting module (23) for transmitting the character strings via satellites is set up in such a manner that the character strings are provided with the code and the character strings are transmitted until this code returned by the satellite or a code derived therefrom has been received and identified by the receiving module (22).

2. Communication system according to Patent Claim 1, **characterized in that** the receiving module (22) and the transmitting module (23) are each designed in such a manner that the communication module (20) can receive and transmit the character strings using a packet-switching protocol, in particular a short message data protocol.

3. Communication system according to Patent Claim 1 or 2, **characterized in that** a flight data output module (27) connected to the data analysis module (25) has a function which transmits a current set of flight data to the formatting module (29) in response to a flight data output command received from the data analysis module (25).

4. Communication system according to one of the preceding claims, **characterized in that** the data analysis module (25) is configured such that it identifies one of the following commands and/or data and transmits it to the data bus (B):
• a command for activating or deactivating a sensor system for acquiring mission data,
• a command for activating a flight data update function for generating current flight data using a sensor system,
• a desired flight path change command and flight data for defining flight path specifications,
• an aircraft self-destruct command.

5. Communication system according to Claim 4, **characterized in that** the mission data comprise information relating to objects on the ground.

6. Aircraft having a communication system (20) according to one of the preceding claims, having a control and mission system and having a data bus (B), **characterized in that** the control and mission system has a flight data update function which generates current flight data using a sensor system in response to a command to generate current flight data, as received from the data bus (B), and feeds current flight data into the data bus (B) in a predetermined sequence, with the result that current flight data are respectively received by the flight data output module and are transmitted to the formatting module (29).

7. Aircraft having a communication system (20) according to Claim 6, **characterized in that** the flight data comprise the position of the aircraft and/or flight attitude information relating to the aircraft.

8. Aircraft having a communication system (20) according to either of the preceding Claims 6 and 7, **characterized in that** it has an autopilot function with an interface to the data bus (B), which function generates, on the basis of flight path specifications, a desired flight path and control commands which are used to control the aircraft along the desired flight path, and which function receives flight path specifications from the data bus (B) on the basis of a desired flight path change command and generates the control commands on the basis of these received flight path specifications on the basis of the changed desired flight path.

9. Aircraft having a communication system (20) according to one of the preceding Claims 6 to 8, **characterized in that** the control and mission system has a mission data update function which generates current mission data using a sensor system in response to a command to generate current mission data, as received from the data bus (B), and feeds current mission data into the data bus (B) in a predetermined sequence, **in that** a mission data output module (31) connected to the formatting module (29) is connected to the data filter (3), with the result that current flight data are respectively received by the flight data output module and are transmitted to the formatting module (29).

10. Aircraft having a communication system (20) according to Claim 9, **characterized in that** the mission data comprise reconnaissance data for the aircraft.

11. Method for the data transfer of character strings containing commands between at least the aircraft (2) and a further external communication partner (3, 4) via satellites, wherein:
• a receiving module (22) receives character strings via an antenna (21),
• a data analysis module (25) connected to the receiving module (22) has an identification function which identifies commands with respect to their addressee and an output function which transmits commands to a data bus interface (26) or a confirmation module (28) depending on their identified addressee,
wherein, in order to couple the data analysis module (25) to a data bus (B), the data bus interface (26) changes the commands transmitted by analysis module (25) into a format corresponding to the data bus protocol of the aircraft data bus (B) and feeds them into the data bus (B),
wherein the confirmation module (28) connected to the data analysis module (25), after receiving a command that a confirmation message confirming the receipt of a character string is intended to be transmitted to the respective other communication partner, generates a keyword containing a code which can be used to identify a character string received by the receiving module,
• a formatting module (29) connected to the confirmation module (28) converts the data streams to be transmitted via a transmitting module (23) into character strings in accordance with a transmission protocol,
wherein, in order to transmit the character strings via satellites, the transmitting module (23) causes the character strings to be provided with the code and the character strings to be transmitted using the transmitting module (23) until this code returned by the satellite or a code derived therefrom has been received and identified by the receiving module (22).

12. Method according to Claim 11, **characterized by** transmission and reception of the character strings by the receiving module (22) and the transmitting module (23) of the communication module (20) using a packet-switching protocol, in particular a short message data protocol.

13. Method according to Claim 11 or 12, **characterized by**: in response to the reception of a command to carry out control movements of the aircraft (2), transmission of this command to an actuator system of the aircraft via the data bus (B) in order to perform the commanded control movements.

14. Method according to Claim 11, 12 or 13, **characterized by**: in response to the reception of a command to change the desired path of the aircraft (2), transmission of this command and flight path specifications to a control and mission system via the data bus (B) and overwriting of the previously stored flight path specifications.

15. Method according to one of Claims 11 to 14, **characterized by**: in response to the reception of a command to generate and transmit sensor data using the aircraft system (2), transmission of this command to a sensor system via the data bus (B), generation of sensor data, transmission of the generated sensor data to a mission data output module (31) via the data bus (B) and transmission of the sensor data to external communication partners via the transmitting module (23) and via satellites.

## Revendications

1. Système de communication d'un aéronef (2) destiné à transférer des données de chaînes de caractères au moyen de commandes entre au moins l'aéronef (2) et un autre partenaire de communication externe (3, 4) par l'intermédiaire de satellites, comprenant :
• un module de réception (22) destiné à recevoir au moyen d'une antenne une chaîne de caractères (21),
• un module d'analyse de données (22) connecté au module de réception (25) comportant une fonction d'identification destinée à identifier des commandes en ce qui concerne leurs destinataires et comportant une fonction de sortie destinée à émettre les commandes en fonction de leurs destinataires identifiés à un bus de données (26) ou à un module de confirmation et (28), dans lequel l'interface de bus de données (26) destinée au couplage du module d'analyse de données (25) à un bus de données (B), fait passer les commandes émises par le module d'analyse (25) à un format correspondant au protocole de bus de données du bus de données (B) et les applique au bus de données (B),
dans lequel le module de confirmation (28) connecté au module d'analyse de données (25) est conçu de manière que, après la réception d'une commande, un message de confirmation confirmant la fourniture en entrée d'une chaîne de caractères soit envoyé à l'autre partenaire de communication respectif et un mot clé est généré, celui-ci contenant un code au moyen duquel une chaîne de caractères reçue par le module de réception peut être identifiée,
• un module de formatage (29) qui est connecté au module de confirmation (28) et est conçu pour convertir en des chaînes de caractères les flux de données devant être émis par l'intermédiaire d'un module d'émission (23) selon un protocole de transmission,
dans lequel le module d'émission (23) destiné à envoyer les chaînes de caractères par l'intermédiaire de satellites, est conçu de telle sorte que les chaînes de caractères soient munies du code, et que les chaînes de caractères soient envoyées jusqu'à ce que ce code renvoyé par le satellite ou un code dérivé de celui-ci soit reçu et identifié par le module de réception (22).

2. Système de communication selon la revendication 1, **caractérisé en ce que** le module de réception (22) et le module d'émission (23) sont chacun conçus de manière à ce que le module de communication (20) puisse recevoir et émettre les chaînes de caractères avec un protocole à commutation de paquets, notamment un protocole de données de messages courts.

3. Système de communication selon la revendication 1 ou 2, **caractérisé en ce qu'**un module de sortie de données de vol (27) connecté au module d'analyse de données (25) présente une fonction consistant à envoyer un ensemble courant de données de vol au module de formatage (29) lors d'une commande de sortie de données de vol reçue du module d'analyse de données (25).

4. Système de communication selon l'une quelconque des revendications précédentes, **caractérisé en ce que** le module d'analyse de données (25) est conçu de manière à identifier l'une des commandes et/ou des données suivantes et l'envoie au bus de données (B) :
• une commande destinée à activer ou désactiver un système de capteurs pour détecter des données de mission,
• une commande destinée à activer une fonction d'actualisation de données de vol pour générer des donnes de vol courantes au moyen d'un système de capteurs,
• une commande destinée à modifier la trajectoire nominale et des données de vol destinées à définir des consignes de trajectoire de vol,
• une commande d'autodestruction de l'aéronef.

5. Système de communication selon la revendication 4, **caractérisé en ce que** les données de mission comprennent des informations relatives à des objets situés au sol.

6. Aéronef comportant un système de communication (20) selon l'une des revendications précédentes, comportant un système de commande et de mission et comportant un bus de données (B), **caractérisé en ce que** le système de commande et de mission comprend une fonction d'actualisation des données de vol qui génère des données de vol courantes lors d'une commande reçue du bus de données (B) destinée à générer des données de vol courantes au moyen d'un système de capteur et applique des données de vol courantes selon une séquence prédéterminée au bus de données (B), de manière à ce que des données de vol courantes soient respectivement reçues du module de sortie de données de vol et envoyées au module de formatage (29).

7. Aéronef comportant un système de communication (20) selon la revendication 6, **caractérisé en ce que** les données de vol comprennent la position de l'aéronef et/ou des informations d'attitude de l'aéronef.

8. Aéronef comportant un système de communication (20) selon l'une des revendications 6 ou 7 précédentes, **caractérisé en ce qu'**il comprend une fonction de pilotage automatique comportant une interface avec le bus de données (B) qui génère une trajectoire de vol nominale et des commandes de pilotage sur la base de consignes de trajectoire de vol au moyen desquelles l'aéronef est piloté le long de la trajectoire de vol nominale, et qui reçoit du bus de données (B) des consignes de trajectoire de vol sur la base d'une commande de modification de trajectoire de vol nominale et qui génère sur la base de la trajectoire de vol nominale modifiée des commandes de pilotage sur la base de ces consignes de trajectoire de vol reçues.

9. Aéronef comportant un système de communication (20) selon l'une des revendications 6 à 8 précédentes, **caractérisé en ce que** le système de commande et de mission comprend une fonction d'actualisation des données de mission qui génère des données de mission courantes au moyen d'un système de capteurs lors d'une commande destinée à générer des données de mission courantes reçue du bus de données (B) et applique des données de mission courantes selon une séquence prédéterminée au bus de données (B), **en ce qu'**un module de sortie de données de mission (31) connecté au module de formatage (29) est relié au filtre de données (3), de manière à ce que des données de vol courantes soient respectivement reçues du module de sortie de données de vol et envoyées au module de formatage (29).

10. Aéronef comportant un système de communication (20) selon la revendication 9, **caractérisé en ce que** les données de mission comprennent des données de reconnaissance de l'aéronef.

11. Procédé de transfert de données de chaînes de caractères au moyen de commandes entre au moins l'aéronef (2) et un autre partenaire de communication externe (3, 4) par l'intermédiaire de satellites, dans lequel :
• un module de réception (22) reçoit par l'intermédiaire d'une antenne des chaînes de caractères (21),
• un module d'analyse de données (25) connecté au module de réception (22) comporte une fonction d'identification qui identifie des commandes en ce qui concerne leurs destinataires, et comporte une fonction de sortie qui envoie des commandes en fonction de leurs destinataires identifiés à une interface de bus de données (26) ou à un module de confirmation (28),
dans lequel l'interface de bus de données (26) destinée à coupler le module d'analyse de données (25) à un bus de données (B), qui fait passer les commandes émises par le module d'analyse (25) à un format correspondant au protocole de bus de données du bus de données (B) de l'aéronef et les applique au bus de données (B),
dans lequel le module de confirmation (28) connecté au module d'analyse de données (25), après réception d'une commande, de manière à ce qu'un message de confirmation confirmant la fourniture en entrée d'une chaîne de caractères soit envoyé à l'autre partenaire de communication respectif, génère un mot clé qui contient un code au moyen duquel une chaîne de caractères reçue par le module de réception peut être identifiée,
• un module de formatage (29) connecté au module de confirmation (28) convertit les flux de données devant être émis par l'intermédiaire d'un module d'émission (23) conformément à un protocole de transmission en des chaînes de caractères,
dans lequel le module d'émission (23) destiné à envoyer les chaînes de caractères par l'intermédiaire de satellites fait en sorte que les chaînes de caractères soient munies du code et que les chaînes de caractères soient émises au moyen du module d'émission (23) jusqu'à ce code renvoyé par le satellite ou un code dérivé de celui-ci soit reçu et identifié par le module de réception (22).

12. Procédé selon la revendication 11, **caractérisé par** l'émission et la réception des chaînes de caractères avec un protocole à commutation de paquets, notamment un protocole de données de messages courts, au moyen du module de réception (22) et du module d'émission (23) du module de communication (20).

13. Procédé selon la revendication 11 ou 12, **caractérisé par** : lors de la réception d'une commande d'exécution de mouvements de commande de l'aéronef (2), la transmission de cette commande par l'intermédiaire du bus de données (B) à un système d'actionneurs de l'aéronef pour mettre en oeuvre les mouvements de commande ordonnés.

14. Procédé selon la revendication 11, 12 ou 13, **caractérisé par** : lors de la réception d'une commande de modification de la trajectoire de consigne de l'aéronef (2), la transmission de cette commande et de consignes de trajectoire de vol par l'intermédiaire du bus de données (B) à un système de commande et de mission et l'écrasement des consignes de trajectoire de vol précédemment stockées.

15. Procédé selon l'une des revendications 11 à 14, **caractérisé par** : lors de la réception d'une commande destinée à générer et transmettre des données de capteurs par l'intermédiaire du système de l'aéronef (2), la transmission de cette commande par l'intermédiaire du bus de données (B) à un système de capteurs, la génération de données de capteurs, l'émission des données de capteurs générées par l'intermédiaire du bus de données (B) à un module de sortie de données de mission (31) et la transmission des données de capteurs par l'intermédiaire du module d'émission (23) et par l'intermédiaire de satellites à des partenaires de communication externes.
